# EUROPÄISCHE PATENTSCHRIFT

(11) **EP 1 595 070 B1**
(45) Veröffentlichungstag und Bekanntmachung des Hinweises auf die Patenterteilung: **10.10.2007**
(21) Anmeldenummer: 04706608.9
(22) Anmeldetag: 30.01.2004
(51) Int. Cl.: F02M 1/16, F02M 37/00, F02M 37/12

(54) **FAHRZEUG MIT EINER TRENNVORRICHTUNG**
VEHICLE COMPRISING A SEPARATING DEVICE
VEHICULE POURVU D'UN DISPOSITIF DE SEPARATION

(30) Priorität: 12.02.2003 DE 10305660
(43) Veröffentlichungstag der Anmeldung: 16.11.2005
(73) Patentinhaber: ROBERT BOSCH GMBH, 70442 Stuttgart (DE)
(72) Erfinder: NEUBAUER, Achim, 76547 Sinzheim-Vormberg (DE); HEID, Thomas, 76547 Sinzheim (DE)
(86) Internationale Anmeldenummer: PCT/DE2004/000142
(87) Internationale Veröffentlichungsnummer: WO 2004/072466

(56) Entgegenhaltungen:
- EP-A- 0 549 655
- EP-A- 1 002 946
- WO-A-00/77382
- US-A- 3 892 218
- US-A- 4 257 366

## Beschreibung

Die Erfindung betrifft ein Fahrzeug mit einer Trennvorrichtung zur Abtrennung einzelner, insbesondere niedersiedender Brennstoffkomponenten aus einem flüssigen Brennstoffgemisch nach dem Oberbegriff des Anspruchs 1.

### Stand der Technik

Bei derzeitigen Fahrzeugen wie Personenkraftwagen bzw. Lastkraftwagen oder dergleichen werden während der Kaltstartphase des mit flüssigem Kraftstoff betriebenen Verbrennungsmotors relativ große Mengen an Schadstoffen emittiert. Diese weisen einen großen Anteil an den Gesamtemissionen in bestimmten Fahrzyklen auf, z.B. bis zu 70% bezogen auf den Gesamtzyklus. Solange der Abgaskatalysator seine Betriebstemperatur nicht erreicht hat, trägt dieser nur unwesentlich zur Minderung der SchadstoffEmissionen bei.

Um die Kaltstartemissionen zu reduzieren, ist beispielsweise bereits ein elektrisch beheizbarer Katalysator bekannt, der hierdurch schneller als passive Systeme seine Betriebstemperatur erreicht. Ein weiteres Konzept ist beispielsweise die Verwendung eines Vorkatalysators, der motornah angeordnet ist. Durch die höhere Abgastemperatur in Motornähe wird die Betriebstemperatur ebenfalls schneller erreicht. Eine weitere Möglichkeit zur Emissionsminderung ist die Verwendung bestimmter Zusatzstoffe (Additive) im Kraftstoff.

Darüber hinaus ist bereits die Verwendung geeigneter Kraftstofffraktionen, z.B. niedersiedende Anteile des Kraftstoffs, als Brennstoff in besonderen Betriebsphasen bekannt (vgl. z.B. US 6,119,637 oder DE 197 13 841 C1). Während der Kaltstartphase lässt sich hierdurch eine verbesserte Verbrennung der Rohemissionen des Motors erreichen.

Entsprechende niedersiedende Komponenten des Kraft- bzw. Brennstoffgemisches können auch z.B. bei Fahrzeugen mit Brennstoffzellenanlagen vor allem in der Kaltstartphase eines Reformers vorgesehen sein, der zur Reformierung des Kraftstoffs zu einem wasserstoffhaltigen Betriebsmedium der Brennstoffzelleneinheit ausgebildet ist.

Nachteilig bei bisher bekannten Trennvorrichtungen ist, dass die entsprechende Gasfördervorrichtung das Luft-Kraftstoff-Dampfgemisch aus dem Vorratsspeicher des Fahrzeugs bzw. Fahrzeugtankes absaugt. Hierdurch muss die Gasfördervorrichtung bzw. Pumpe hohe Anforderungen an die Beständigkeit gegenüber den zumeist chemisch reaktiven Kraftstoffgemischen bzw. deren Komponenten erfüllen. Beispielsweise müssen aufwändige Dichtmaßnahmen bezüglich kondensierender Kraftstoffdämpfe im Pumpenkopf vorgesehen werden, wodurch sichergestellt wird, dass kein Kraftstoff in die kritischen Pumpenbereiche gelangen kann.

Darüber hinaus sind bereits Fahrzeuge bekannt, bei denen der Verbrennungsmotor als Gasfördervorrichtung zum Ansaugen der Brennstoffkomponenten ausgebildet ist. Bei entsprechenden Fahrzeugen ist jedoch von Nachteil, dass die Kraftstoffkomponenten ausschließlich bei arbeitendem Motor befördert bzw. in nennenswertem Umfang erzeugt werden.

Weiterhin ist aus der US 3,892,218 ein Fahrzeug mit einer Trennvorrichtung zur Abtrennung einzelner Brennstoffkomponenten aus einem flüssigen Brennstoffgemisch bekannt, wobei ein Mischelement zum Vermischen oder Zusammenführen der Brennstoffkomponenten mit einem Luftstrom vorgesehen ist.

### Aufgabe und Vorteile der Erfindung

Aufgabe der Erfindung ist es demgegenüber, ein Fahrzeug mit einer Trennvorrichtung zur Abtrennung einzelner, insbesondere niedersiedender Brennstoffkomponenten aus einem flüssigen Brennstoffgemisch, wobei ein Mischelement zum Vermischen bzw. Zusammenführen des Brennstoffkomponentenstroms mit einem Luftstrom und eine Gasfördervorrichtung zum Befördern eines gasförmigen Betriebsstoffstromes vorgesehen sind, vorzuschlagen, wobei die Gasfördervorrichtung gegenüber dem Stand der Technik deutlich geringeren Anforderungen genügen kann.

Diese Aufgabe wird, ausgehend von einem Fahrzeug der einleitend genannten Art, durch die kennzeichnenden Merkmale des Anspruchs 1 gelöst.

Durch die in den Unteransprüchen genannten Maßnahmen sind vorteilhafte Ausführungen und Weiterbildungen möglich.

Dementsprechend zeichnet sich ein erfindungsgemäßes Fahrzeug dadurch aus, dass die Gasfördervorrichtung in Strömungsrichtung des Luftstroms vor dem Mischelement angeordnet ist. Mit Hilfe dieser Maßnahme steht die Gasfördervorrichtung ausschließlich mit Luft als zu beförderndes Gas in direktem Kontakt, wodurch in besonders eleganter Weise eine Beeinträchtigung der Gasfördervorrichtung durch die mit dieser möglichst indirekt zu befördernden Brennstoffkomponenten bzw. Brennstoffmengen wirkungsvoll verhindert wird. Dementsprechend kann eine vergleichsweise einfach ausgestaltete und somit wirtschaftlich besonders günstige Gasfördervorrichtung bzw. Gaspumpe gemäß der Erfindung vorgesehen werden. Gegebenenfalls kann auf bisher bereits handelsübliche Standardkomponenten als Gasfördervorrichtung zurückgegriffen werden, so dass eine besonders wirtschaftlich günstige Ausführungsform gemäß der Erfindung realisierbar ist.

Beim Stand der Technik muss die Gasfördervorrichtung dem jeweiligen Kraft- bzw. Brennstoff aufgrund unterschiedlichster chemischer Eigenschaften angepasst werden. Hierdurch wird beispielsweise die Verwendung von jeweils speziell auf den Kraftstoff abgestimmten bzw. konstruktiv entsprechend ausgelegten Gasfördervorrichtungen bzw. Pumpen notwendig. Beispielsweise werden gemäß dem Stand der Technik "Dieselpumpen" oder "Benzinpumpen" in entsprechenden Fahrzeugen eingesetzt. Gemäß der Erfindung erfolgt eine vorteilhafte Abkopplung der Gasfördervorrichtung vom Brennstoff bzw. dessen Komponenten, so dass bei allen, bisher gebräuchlichen flüssigen Brennstoffgemischen eine einzige, gegebenenfalls standardisierte Trennvorrichtung einsetzbar ist. Hierdurch erhöhen sich die Produktionszahlen für Trennvorrichtungen gemäß der Erfindung, so dass diese wirtschaftlich besonders günstig herstellbar sind.

In einer vorteilhaften Weiterbildung der Erfindung ist das Mischelement als Treibmittelpumpe bzw. Strahlpumpe oder dergleichen ausgebildet, wobei der Luftstrom als Treibmittel bzw. Strahlmittel zum Befördern des Brennstoffkomponentenstroms vorgesehen ist. Vorteilhafterweise ist die Gasfördervorrichtung in Strömungsrichtung des Luftstroms vor der Erzeugung der Brennstoffkomponenten und die Treibmittelpumpe in Strömungsrichtung des Luftstroms hinter der Erzeugung der Brennstoffkomponenten angeordnet. Eine Treibmittelpumpe bzw.

Strahlpumpe kann vergleichsweise einfach, insbesondere ohne relevante mechanisch bewegliche Teile aufgebaut werden, so dass gerade diese Pumpen ohne großem Aufwand besonders widerstandsfähig gegenüber den Brennstoffkomponenten bzw. dem Brennstoffgemisch realisierbar sind.

Vorzugsweise ist die Treibmittelpumpe als Venturirohr bzw. Venturidüse ausgebildet. Ein entsprechend vorgesehenes Venturirohr ist besonders einfach herstellbar. Beispielsweise weist das Venturirohr eine entsprechende Verengung in Längsrichtung des Rohres auf, wobei vorzugsweise an dem engsten Bereich des Venturirohres eines Zufuhröffnung bzw. die Zuführung des Brennstoffkomponentenstroms vorgesehen ist. Die Treibmittelpumpe bzw. das Venturirohr erzeugt einen Unterdruck, der insbesondere vom Verhältnis des Einströmquerschnitts zum engsten Querschnitt sowie der Strömungsgeschwindigkeit des Luftstroms abhängt. Der vorteilhaft erzeugte Unterdruck, d.h. der Unterdruck ist geringer als der atmosphärische Druck, saugt die Brennstoffkomponenten an und verbessert hierdurch die Erzeugung dieser bzw. führt zu einer vermehrten Produktion an niedersiedenden Brennstoffkomponenten.

In einer bevorzugten Variante der Erfindung ist die Treibmittelpumpe bzw. Strahlmittelpumpe als Kondensationseinheit zum wenigstens teilweise Kondensieren der Brennstoffkomponenten ausgebildet. Mit Hilfe dieser Maßnahme kann gegebenenfalls auf eine separate Kondensationseinheit zum Kondensieren der Brennstoffkomponenten verzichtet werden. Die Kondensation der Brennstoffkomponenten mittels der Treibmittelpumpe wird insbesondere durch eine vorteilhafte Ausgestaltung bzw. Konstruktion dieser realisiert. Beispielsweise erfolgt in vorteilhafter Weise eine Aufweitung des Strömungsquerschnitts nach dem engsten Querschnittbereich der Treibmittelpumpe bzw. des Venturirohres, so dass die Brennstoffkomponenten vorteilhaft auskondensieren.

Möglicherweise ist eine separate Kondensationseinheit zum Kondensieren der Brennstoffkomponenten vorgesehen. Diese ist insbesondere als Kühlvorrichtung mit einem Kühlmittel ausgebildet. Gegebenenfalls wird das Brennstoffgemisch als Kühlmittel gemäß der Erfindung ausgebildet. Hierdurch wird in vorteilhafter Weise eine Erwärmung des Brennstoffgemisches erreicht, so dass vor allem die Erzeugung der Brennstoffkomponenten zusätzlich verbessert wird. Beispielsweise wird das zu kondensierende Brennstoffkomponenten-Luftstromgemisch mittels um oder in einem Brennstoffgemischspeicher angeordneten Kühlleitungen oder dergleichen zum Kondensieren gebracht.

Gegebenenfalls ist eine separate Heizeinheit zum Erwärmen des Brennstoffgemisches vorgesehen. Beispielsweise kann eine elektrische, chemische und/oder vergleichbar zu betreibende Heizeinheit vorgesehen werden. Möglicherweise umfasst die Heizeinheit wenigstens einen Wärmetauscher, der zur Kühlung der Verbrennungseinrichtung bzw. des Fahrzeugmotors, der Brennstoffzellenanlage oder dergleichen ausgebildet ist.

Vorteilhafterweise ist das Brennstoffgemisch als Kühlmittel der Gasfördervorrichtung ausgebildet. Die durch den Betrieb der Gasfördervorrichtung erzeugte Wärme wird gemäß dieser Maßnahme in vorteilhafter Weise zur Verbesserung der Brennstoffkomponentenerzeugung verwendet. Hierdurch kann eine besonders einfach bzw. mit geringem Aufwand betriebene Trennvorrichtung gemäß der Erfindung realisiert werden.

Vorzugsweise ist die Gasfördervorrichtung in einem Brennstoffspeicher zum Speichern des Brennstoffgemisches angeordnet. Hiermit wird ermöglicht, dass ein vorteilhafter Wärmeaustausch der Abwärme der Gasfördervorrichtung mit dem Brennstoffgemisch realisierbar ist. Gegebenenfalls taucht die Gasfördervorrichtung wenigstens teilweise in das Brennstoffgemisch ein.

In einer besonderen Weiterbildung der Erfindung ist wenigstens eine Belüftungsvorrichtung zum Einbringen von atmosphärischer Luft in das Brennstoffgemisch vorgesehen. Hiermit wird die Erzeugung der einzelnen, insbesondere niedersiedenden Brennstoffkomponenten zusätzlich verbessert. Möglicherweise wird die Luft mittels Düsen oder dergleichen in das Brennstoffgemisch eingedüst bzw. eingebracht, so dass eine besonders vorteilhafte Vermischung bzw. Aufwirbelung des Brennstoffgemisches mittels der Luft realisierbar ist.

Vorteilhafterweise ist wenigstens ein Zwischenspeicher zum Speichern der Brennstoffkomponenten vorgesehen. Ein entsprechender Zwischenspeicher ermöglicht eine vorteilhafte zeitliche und/oder räumliche Entkoppelung der Brennstoffkomponentenerzeugung vom Ge- bzw. Verbrauch der Brennstoffkomponenten. Beispielsweise kann in einer Startphase des Fahrzeugs bzw. der Fahrzeugkomponenten zu einem früheren Zeitpunkt erzeugte und entsprechend zwischengespeicherte Brennstoffkomponenten in vorteilhafter Weise verwendet werden.

In einer vorteilhaften Ausführungsform der Erfindung weist wenigstens eine Brennstofffördereinheit zur Beförderung des flüssigen Brennstoffgemisches wenigstens eine Brennstofftreibmittelpumpe auf, wobei der Luftstrom als Treibmittel bzw. Strahlmittel zum Befördern des Brennstoffgemischstroms vorgesehen ist. Mit Hilfe dieser Maßnahme wird insbesondere eine multifunktionelle Verwendung der Gasfördervorrichtung bzw. des durch diese beförderten Luftstromes umgesetzt, so dass sich in vorteilhafter Weise der Aufwand gemäß der Erfindung weiter reduziert. Zudem können insbesondere gleichzeitig mehrere unterschiedliche Stoffe befördert werden.

Vorzugsweise sind wenigstens teilweise die Brennstofftreibmittelpumpe, der Zwischenspeicher, der Brennstoffspeicher, die Belüftungsvorrichtung, die Gasfördervorrichtung und das Mischelement innerhalb eines Brennstofftanks zum Speichern des Brennstoffgemisches angeordnet. Ein entsprechend ausgebildetes Modul bzw. eine Baueinheit setzt in vorteilhafter Weise eine nahezu vollständige Integration dieser Komponenten im bereits gebräuchlichen Brennstofftank des Fahrzeugs um. Eine erfindungsgemäße Baueinheit bzw. ein Modul ist vor allem aufgrund der Kompaktheit, platzsparenden Anordnung, modularen bzw. standardisierten Verwendungsweise gerade im Fahrzeugbau ganz besonders von Vorteil.

### Ausführungsbeispiel

Ein Ausführungsbeispiel der Erfindung ist in der Zeichnung dargestellt und wird anhand der einzigen Figur nachfolgend näher erläutert.

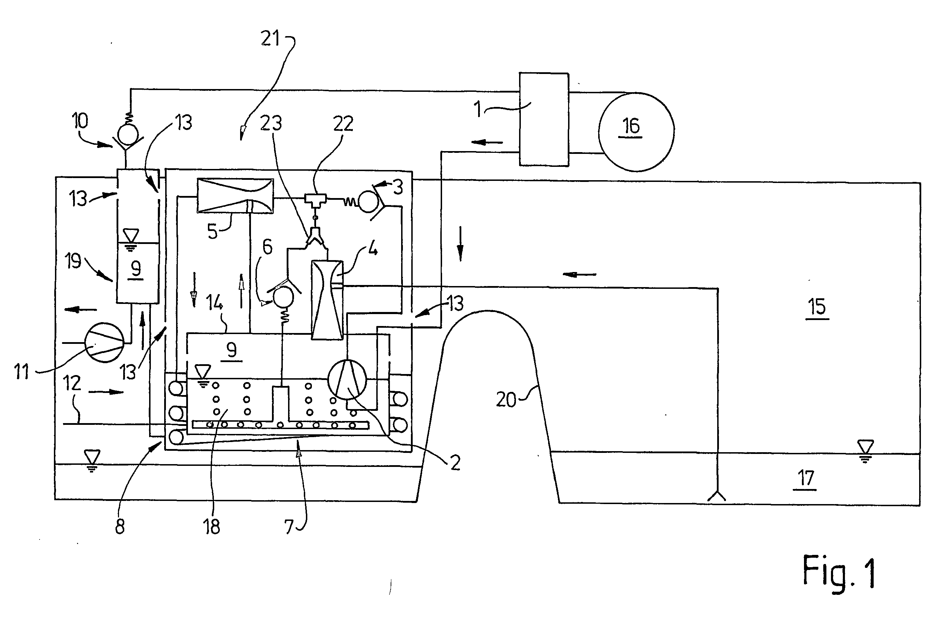

In Figur 1 ist schematisch eine in einem Fahrzeugtank 15 weitestgehend integrierte Trenneinheit 21 gemäß der Erfindung dargestellt.

Als Gasförderpumpe bzw. Luftpumpe 2 kann beispielsweise eine Flügelzellenpumpe bzw. Bidruckpumpe vorgesehen werden. Entsprechende Flügelzellenpumpen sind bereits handelsüblich, so dass auf bereits vorhandene Standardkomponenten zurückgegriffen werden kann.

Mit Hilfe der Luftpumpe 2 wird Luft 16 aus der Atmosphäre über einen Aktivkohlefilter 1 angesaugt. Der Luftstrom wird in Strömungsrichtung hinter der Luftpumpe 2 über ein Druckventil bzw. Rückschlagventil 3 zu einer Venturidüse 5 zugeführt. Die Venturidüse 5 ist als Treibmittelpumpe bzw. Strahlpumpe ausgebildet, so dass Kraftstoffkomponenten bzw. Startkraftstoff 9 aus einem Sammelbehälter 14 abgesaugt, mit der Luft 16 vermischt bzw. zusammengeführt und optional über eine Kondensationsstrecke 8 einem Startkraftstoffbehälter 19 zugeführt wird.

In einer besonderen Weiterbildung der Erfindung ist die Venturidüse als Kondensationseinheit zum wenigstens teilweise kondensieren des Startkraftstoffdampfes ausgebildet, so dass der Startkraftstoff 9 im Startkraftstoffbehälter 19 in flüssigem Zustand zwischengespeichert werden kann. Möglicherweise kann hierbei die Kondensationsstrecke 8 weitestgehend entfallen.

Zur Verbesserung der Brennstoffkomponentenabtrennung aus einem Kraftstoff 18 ist eine Belüftungseinrichtung 7 vorgesehen. Der Belüftungseinrichtung 7 wird mittels der Luftpumpe 2 über eine Abzweigung 22 und einem Druckventil bzw. Rückschlagventil 6 Luft 16 zugeführt. Die Luft 16 wird vorzugsweise aus zahlreichen Öffnungen bzw. Düsen in den Sammelbehälter 14 bzw. in den Kraftstoff 18 eingeblasen bzw. eingebracht. Hierbei wird insbesondere eine Verwirbelung bzw. Vermischung der eingebrachten Luft 16 mit dem Kraftstoff 18 erreicht.

Die Luftpumpe 2 bzw. Luft 16 befördert weiterhin mit Hilfe einer zweiten Venturidüse 4 indirekt einen Kraftstoff 17 des Fahrzeugtankes 15 in den Sammelbehälter 14. Hierbei strömt Luft 16 über die Abzweigung 22 und eine Abzweigung 23 als Treibmittel 16 durch die Venturidüse 4, so dass der Kraftstoff 17 in den Sammelbehälter 14 gesaugt bzw. indirekt durch die Luft 16 transportiert wird. Hierdurch kann der Kraftstoff 17 in vorteilhafter Weise unabhängig von einer Arbeitsphase der Verbrennungskrafteinrichtung oder dergleichen der Trenneinheit 21 zugeführt werden. Dies ist insbesondere für eine Abtrennung der Brennstoffkomponenten 9 vom flüssigen Brennstoffgemisch 17, 18 während einem Stillstand des Verbrennungsmotors von besonderem Vorteil.

Im Allgemeinen weisen derzeitige Fahrzeuge, insbesondere Personenkraftwagen, Nutzfahrzeuge wie Busse oder Lastwagen, Schiffe, Flugzeuge, usw. eine Rücklaufleitung 12 einer nicht näher dargestellten, sogenannten Kraftstoffhauptpumpe auf. Gemäß Figur 1 kann diese Rücklaufleitung 12 bzw. die Kraftstoffhauptpumpe zur optional vorzusehenden zweiten Variante für die Befüllung des Sammelbehälters 14 mit Kraftstoff 18 verwendet werden.

Im Allgemeinen weist der Sammelbehälter 14 als auch der Startkraftstoffbehälter 19 vorteilhafte Überlauföffnungen 13 bzw. Belüftungsöffnungen 13 auf. Vorzugsweise weist der Sammelbehälter 14 ein Entlüftungsventil bzw. Rückschlagventil 10 auf, wobei gegebenenfalls die Kraftstoffkomponenten 9 über den Aktivkohlefilter 1 absorbiert werden, bevor die zu entlüftende Luft 16 an die Atmosphäre abgegeben wird.

Gemäß der Erfindung befördert die Luftpumpe 2 ausschließlich Luft 16 und keinen Kraftstoff 17, 18 bzw. keine Kraftstoffkomponenten bzw. Startkraftstoff 9. Hierdurch können die Anforderungen z.B. bezüglich der chemischen Beständigkeit oder der Dichtigkeit des Pumpenkopfes, etc. gegenüber dem Stand der Technik entscheidend herabgesetzt werden. In vorteilhafter Weise benötigt die Luftpumpe 2, die zur Förderung des Kraftstoffdampfes eingesetzt wird, außer den allgemein üblichen Anpassungen zur Erfüllung der Anforderung für einen Tankeinbau keine zusätzlichen Dichtmaßnahmen bezüglich kondensierender Kraftstoffdämpfe oder dergleichen.

Mittels der Trenneinheit 21 kann die Reformierung bzw. Herstellung von Kraftstoffkomponenten aus unterschiedlichsten Kraftstoffen 17, 18 bei jeder Fahrzeuglage bzw. jeden Umgebungsbedingungen durchgeführt werden. Hierdurch können beliebig viele Kaltstarts eines konventionellen Verbrennungsmotors oder dergleichen durchgeführt werden. Grundsätzlich kann im Fall von Fahrzeugen mit Verbrennungsmotor bei einem Motorkaltstart mit Startkraftstoff 9 die ansonsten verwendeten Vorkatalysatoren entfallen, was einen wesentlichen Kosten-, Verbrauchs- und Emissionsvorteil darstellt. Zudem wird eine erhebliche Reduzierung der Anlaufzeit von Brennstoffzellen-Reformersystemen erreicht.

Gemäß Figur 1 kann die Trenneinheit 21 im Wesentlichen als Modul im Fahrzeugtank 15 unabhängig von der Einbaulage der Kraftstoffpumpe inline oder im Tank 15 integriert bzw. positioniert werden. In bekannter Weise weist der Tank 15 wenigstens eine Erhöhung 20 auf.

Die Funktion des Gesamtsystems wird vor allem durch die vorteilhafte Auslegung der Luftpumpe 2 sowie der geometrischen Gestaltung der Venturidüsen 4, 5 und Querschnitte der Kanäle für die Luftströmung gewährleistet.

Generell kann gemäß der Erfindung zwischen der Trennvorrichtung 21 und einer Abgasbehandlungseinheit der Verbrennungskraftmaschine des Fahrzeugs wenigstens eine Zuführung der Kraftstoffkomponente 9 zu einer Abgasbehandlungseinheit wie zum Beispiel zu einem Katalysator oder dergleichen vorgesehen werden. Hiermit wird unter anderem ermöglicht, dass die abgetrennte Kraftstoffkomponente 9 zur sogenannten nachmotorischen Verwendung bzw. Emissionsminderung gegebenenfalls während einer Kaltstartphase der Abgasbehandlungseinheit und/oder einer speziellen Abgasbehandlungsphase zugeführt werden kann.

Gegebenenfalls ist die spezielle Abgasbehandlungsphase eine den Abgasstrom mittels einem Reduktionsmittel reduzierende Reduktionsphase.

Beispielsweise wird die gezielt abgetrennte Kraftstoffkomponente gegebenenfalls auch als Vorläufersubstanz zur Herstellung von weiteren Betriebsmitteln bzw. als Reduktionsmittel zur Minderung von Stickoxidemissionen des Fahrzeugs verwendet. Für die Reduktion der Emissionen von Stickoxiden, insbesondere von mager betriebenen Verbrennungsmotoren wie Diesel- oder Benzin-Direkteinspritzern sind bereits sogenannte SCR-Verfahren (Selective Catalytic Reduction-Verfahren) bekannt. Hierzu wird ein Reduktionsmittel benötigt, das mittels einem geeigneten Katalysator oder dergleichen mit den Stickoxiden des Abgasstromes zu Wasser, Stickstoff und Kohlendioxid reagiert.

Im Allgemeinen werden für entsprechende SCR-Verfahren Ammoniak oder Ammoniak bildende Substanzen verwendet. Gegebenenfalls können hierzu auch Kohlenwasserstoffe eingesetzt werden. Unterschiedliche Kohlenwasserstoffe besitzen jedoch ein unterschiedlich großes Reduktionspotenzial für entsprechende Emissionsminderungsverfahren. Bei der direkten Verwendung des Brennkraftstoffs 17, 18 als Reduktionsmittel entsteht beispielsweise ein relevanter Mehrverbrauch, der u.a. darauf zurückzuführen ist, dass bestimmte Kraftstofffraktionen für die Reduktion von NOₓ ungeeignet sind. Durch die Abtrennung der Kraftstoffkomponenten gemäß der Erfindung können besonderes geeignete Kohlenwasserstoffbestandteile bzw. -Fraktionen aus dem Kraftstoff 17, 18 gezielt abgetrennt werden, so dass gerade die Stickoxidreduktion des Abgases deutlich effizienter zu realisieren ist, wodurch insbesondere ein relevanter Mehrverbrauch des Kraftstoffs 17, 18 wirkungsvoll verhindert bzw. die Entstickung verbessert wird.

In einer vorteilhaften Ausführungsform der Erfindung werden die abgetrennten Kraftstoffkomponenten als Vorläufersubstanz für unterschiedlichste Anwendungsfälle verwendet. Vorzugsweise ist zwischen der Vorrichtung und einer Umformeinheit zur Umformung der Kraftstoffkomponente insbesondere zu einem Brennstoff einer Brennstoffzelleneinheit wenigstens eine Zuführung der Kraftstoffkomponente zur Umformeinheit angeordnet. Hierdurch wird ermöglicht, dass die abgetrennte Kraftstoffkomponente als Vorläufersubstanz zur Reformierung bzw. zur Wasserstoffproduktion, für Crackverfahren oder dergleichen verwendbar ist. In vorteilhafter Weise wird hierzu als Ausgangsstoff vor allem der untere, sogenannte "Siedeschnitt", d.h. Leichtsieder, des Kraftstoffgemisches 17, 18 verwendet, da vor allem kurzkettige Kohlenwasserstoffe eine geringere Tendenz zur Kohlenstoffablagerung auf entsprechenden Katalysatoren aufweisen und somit insbesondere die Standzeit dieser Katalysatoren erhöht wird. Des Weiteren weisen kurzkettige Kohlenwasserstoffe in vorteilhafter Weise einen höheren Wasserstoffgehalt auf.

## Patentansprüche

1. Fahrzeug mit einer Trennvorrichtung (21) zur Abtrennung einzelner, insbesondere niedersiedender Brennstoffkomponenten (9) aus einem flüssigen Brennstoff-Gemisch (17, 18), wobei ein Mischelement (5) zum Vermischen oder Zusammenführen des Brennstoff-Komponentenstroms (9) mit einem Luftstrom (16) und eine Gasfördervorrichtung (2) zum Befördern eines gasförmigen Betriebsstoffstromes (9, 16) vorgesehen ist, und wobei die Gasfördereinrichtung (2) in Strömungsrichtung des Luftstroms (16) vor dem Mischelement (5) angeordnet ist, **dadurch gekennzeichnet, dass** die Gasfördervorrichtung (2) in einem Brennstoffspeicher (14, 15) zum Speichern des Brennstoffgemischs (17, 18) angeordnet ist.

2. Fahrzeug nach Anspruch 1, **dadurch gekennzeichnet, dass** das Mischelement (5) als Treibmittelpumpe (5) ausgebildet ist, wobei der Luftstrom (16) als Treibmittel (16) zum Befördern des Brennstoff-Komponentenstroms (9) vorgesehen ist.

3. Fahrzeug nach einem der vorgenannten Ansprüche, **dadurch gekennzeichnet, dass** die Treibmittelpumpe (5) als VenturiRohr (5) ausgebildet ist.

4. Fahrzeug nach einem der vorgenannten Ansprüche, **dadurch gekennzeichnet, dass** die Treibmittelpumpe (5) als Kondensationseinheit (5) zum wenigstens teilweisen Kondensieren der Brennstoff-Komponenten (9) ausgebildet ist.

5. Fahrzeug nach einem der vorgenannten Ansprüche, **dadurch gekennzeichnet, dass** das Brennstoff-Gemisch (17, 18) als Kühlmittel (18) der Gasfördervorrichtung (2) ausgebildet ist.

6. Fahrzeug nach einem der vorgenannten Ansprüche, **dadurch gekennzeichnet, dass** wenigstens eine Belüftungsvorrichtung (7) zum Einbringen von Luft (16) in das Brennstoff-Gemisch (17, 18) vorgesehen ist.

7. Fahrzeug nach einem der vorgenannten Ansprüche, **dadurch gekennzeichnet, dass** wenigstens ein Zwischenspeicher (19) zum Speichern der Brennstoff-Komponenten (9) vorgesehen ist.

8. Fahrzeug nach einem der vorgenannten Ansprüche, **dadurch gekennzeichnet, dass** wenigstens eine Brennstoff-Fördereinheit (2, 4) zur Beförderung des flüssigen Brennstoff-Gemisches (17, 18) wenigstens eine Brennstoff-Treibmittelpumpe (4) aufweist, wobei der Luftstrom (16) als Treibmittel (16) zum Befördern des Brennstoff-Gemischstroms (17, 18) vorgesehen ist.

9. Fahrzeug nach einem der vorgenannten Ansprüche, **dadurch gekennzeichnet, dass** wenigstens teilweise die Brennstoff-Treibmittelpumpe (4), der Zwischenspeicher (19), der Brennstoffspeicher (14), die Belüftungsvorrichtung (7), die Gasfördervorrichtung (2) und das Mischelement (5) innerhalb eines Brennstoff-Tanks (15) zum Speichern des Brennstoff-Gemisches (17, 18) angeordnet sind.

## Claims

1. Vehicle having a separating device (21) for separating individual, in particular low-boiling fuel components (9) from a liquid fuel mixture (17, 18), with a mixing element (5) for mixing or merging the fuel component flow (9) with an air flow (16), and a gas delivery device (2) for delivering a gaseous operating material flow (9, 16), being provided, and with the gas delivery device (2) being arranged upstream of the mixing element (5) in the flow direction of the air flow (16), **characterized in that** the gas delivery device (2) is arranged in a fuel accumulator (14, 15) for storing the fuel mixture (17, 18).

2. Vehicle according to Claim 1, **characterized in that** the mixing element (5) is embodied as a propellant pump (5), with the air flow (16) being provided as a propellant (16) for delivering the fuel component flow (9).

3. Vehicle according to one of the preceding claims, **characterized in that** the propellant pump (5) is embodied as a venturi tube (5).

4. Vehicle according to one of the preceding claims, **characterized in that** the propellant pump (5) is embodied as a condensation unit (5) for at least partially condensing the fuel components (9).

5. Vehicle according to one of the preceding claims, **characterized in that** the fuel mixture (17, 18) is embodied as a coolant (18) of the gas delivery device (2).

6. Vehicle according to one of the preceding claims, **characterized in that** at least one aerating device (7) for introducing air (16) into the fuel mixture (17, 18) is provided.

7. Vehicle according to one of the preceding claims, **characterized in that** at least one buffer accumulator (19) for storing the fuel components (9) is provided.

8. Vehicle according to one of the preceding claims, **characterized in that** at least one fuel delivery unit (2, 4) for delivering the liquid fuel mixture (17, 18) has at least one fuel-propellant pump (4), with the air flow (16) being provided as a propellant (16) for delivering the fuel mixture flow (17, 18).

9. Vehicle according to one of the preceding claims, **characterized in that** at least partially the fuel-propellant pump (4), the buffer accumulator (19), the fuel accumulator (14), the aerating device (7), the gas delivery device (2) and the mixing element (5) are arranged within a fuel tank (15) for storing the fuel mixture (17, 18).

## Revendications

1. Véhicule comportant un séparateur (21) pour séparer différents composants de carburant (9) notamment à faible température d'ébullition à partir d'un mélange liquide de carburant (17, 18), selon lequel :
- un élément mélangeur (5) mélange ou réunit le flux des composants de carburant (9) à une veine d'air (16) et un dispositif de pompage de gaz (2) débite un flux de combustible gazeux (9, 16), et
- l'installation de pompage de gaz (2) est installée en amont de l'élément mélangeur (5) selon le sens de passage de la veine d'air (16),
**caractérisé en ce que**
le dispositif de pompage de gaz (2) est installé dans un réservoir de carburant (14, 15) qui contient le mélange de carburant (17, 18).

2. Véhicule selon la revendication 1,
**caractérisé en ce que**
l'élément mélangeur (5) est une pompe à agent propulseur (5), la veine d'air (16) constituant l'agent propulseur (16) pour la veine de composants de carburant (9).

3. Véhicule selon l'une quelconque des revendications précédentes,
**caractérisé en ce que**
la pompe d'agent propulseur (5) est un tube Venturi (5).

4. Véhicule selon l'une quelconque des revendications précédentes,
**caractérisé en ce que**
la pompe d'agent propulseur (5) est une unité de condensation (5) pour condenser au moins en partie les composants de carburant (9).

5. Véhicule selon l'une quelconque des revendications précédentes,
**caractérisé en ce que**
le mélange de carburant (17, 18) est un agent de refroidissement (18) du dispositif de pompage de gaz (2).

6. Véhicule selon l'une quelconque des revendications précédentes,
**caractérisé par**
au moins un dispositif de ventilation (7) pour introduire de l'air (16) dans le mélange combustible (17, 18).

7. Véhicule selon l'une quelconque des revendications précédentes,
**caractérisé par**
au moins un réservoir intermédiaire (19) pour recevoir les composants de carburant (9).

8. Véhicule selon l'une quelconque des revendications précédentes,
**caractérisé par**
au moins une unité de pompage de carburant (2, 4) pour pomper le mélange de carburant liquide (17, 18) comprenant au moins une pompe à agent propulseur de carburant (4), le flux d'air (16) servant d'agent propulseur (16) pour débiter le mélange de carburant (17, 18).

9. Véhicule selon l'une quelconque des revendications précédentes,
**caractérisé en ce qu'**
au moins en partie la pompe d'agent propulseur de carburant (4), le réservoir intermédiaire (19), le réservoir de carburant (14), le dispositif de ventilation (7), le dispositif de pompage de gaz (2) et l'élément mélangeur (5) sont logés dans un réservoir à carburant (15) pour stocker le mélange de carburant (17, 18).
